# EUROPEAN PATENT SPECIFICATION

(11) **EP 3 198 577 B1**
(45) Date of publication and mention of the grant of the patent: **11.07.2018**
(21) Application number: 15775824.4
(22) Date of filing: 21.09.2015
(51) Int. Cl.: G08C 17/00

(54) **A SYSTEM FOR MANAGING SERVICES**
SYSTEM ZUR VERWALTUNG VON DIENSTEN
SYSTÈME DE GESTION DE SERVICES

(30) Priority: 25.09.2014 US 201462055019 P
(43) Date of publication of application: 02.08.2017
(73) Proprietor: Philips Lighting Holding B.V., 5656 AE Eindhoven (NL)
(72) Inventor: NIE, Weiran, NL-5656 AE Eindhoven (NL); WEN, Yao-Jung, NL-5656 AE Eindhoven (NL); WANG, Jianfeng, NL-5656 AE Eindhoven (NL); RANGAVAJHALA, Sirisha, NL-5656 AE Eindhoven (NL); PATEL, Maulin Dahyabhai, NL-5656 AE Eindhoven (NL); SHAH, Parikshit, NL-5656 AE Eindhoven (NL); RIISTAMA, Jarno Mikael, NL-5656 AE Eindhoven (NL); VAN HALTEREN, Aart Tijmen, NL-5656 AE Eindhoven (NL)
(74) Representative: Verweij, Petronella Daniëlle
(86) International application number: PCT/IB2015/057245
(87) International publication number: WO 2016/046718

(56) References cited:
- EP-A1- 2 506 232
- US-A1- 2003 229 471
- US-A1- 2014 172 176

## Description

The instant application relates to the field of management systems and more particularly to managing provided services based on sensor inputs.

Occupancy or motion sensors have long been used as a lighting control mechanism in office buildings and public areas to save energy. However, in a smart home setting, turning on/off or just dimming up/down light is not attractive enough for the Internet generation. As residential home becomes more and more connected, a smarter lighting system that knows habitant's context such as indoor location, identity, activity and even healthiness will be more attractive to the Internet generation.

Wi-Fi or sound source based localization techniques are known to localize family members in the home. The main disadvantages are inaccuracy and the requirements that a user has to carry certain kinds of signal emitters, such as a smart phone. Camera or RFID-based approaches are also found in the literature for resident activity recognition. But these solutions are too intrusive to be practical.

A pressure sensor is a transducer that turns pressure, such as contact force, air or liquid pressure, into electrical signals. US patent US 2010/0257938A1 titled "Flat planner pressure transducer" describes a flat planar pressure transducer that comprises a planar insulative substrate of a rectangular configuration. The structure forms a very flat, compact pressure transducer that can be utilized with a very small footprint. Their technology is ideal for the current invention to build the pressure sensor unit.

US patent US2008/0266112A1 titled "Valentine pillow" discloses a communication device which can receive tactile input including a word, a symbol or a pattern. Such inputs can be used to control light emitting diodes (LEDs) co-located with the pillow. However, the Valentine pillow requires an explicit user input.

Document US20030229471 A1 discloses a monitoring and response system that relies upon learned models of behaviour. Hence, there is a need in the industry for a method and system for managing surrounding conditions of a user and/or determining healthiness of a user based on detection and analysis of the user's position and/or identity.

In accordance with one aspect of the invention, a system for providing home care based on lighting and pressure/tactile sensors embedded in home comfort objects (HCOs), such as seat cushion, arm supports, shoe pads, mouse pads and neck rests is disclosed. Tactile sensors are manufactured to be flexible, thin and stretchable so that they are invisible and intangible to the user. Spatially continuous or discrete pressure distribution patterns are used to infer the location, the identity, the posture and the healthiness information regarding at least one resident or user. In one embodiment, the inferred information is used to produce a light condition in favor of the resident. In preferred embodiments, the invention can be used to create lighting condition for individual family members, for children's eye care, and generate alarm messages if a resident stays up too late at night.

In accordance with one aspect of the invention, a system for managing home services is disclosed. The system comprising tactile sensor units that measure a measureable event, such as pressure, heat, blood pressure, etc., distributed about one or more home care objects. Information associated with the measured event(s) is provided to a processor, which forms distribution patterns associated with the measured event(s). An action is then determined based on the determined distribution pattern wherein conditions surrounding the home care objects (and the user(s)) are altered.

In accordance with one aspect of the invention, a system for managing home services may be associated with health care, wherein information associated with tactile sensors that measure blood pressure, for example, may be collected and analyzed. The identity of the user may be determined from the collected data and appropriate actions, e.g., contact doctors, may be taken when the collected information satisfies one or more rules regarding taking the corresponding action.

In accordance with one aspect of the invention, a system of managing home services may be associated with office operations, wherein information associated with tactile sensors that measure a pressure of a person working at a desk may be collected and analyzed. The identity of the user may be determined from the collected and analyzed. Appropriate actions, e.g., allow access to computer data, turn on or off lighting, etc., may be taken when the collected information satisfies one or more rules regarding collected information.

In another aspect of the invention, a health status of a user may be determined and monitored. Health related information associated with a user may collected from one set of sensors. In order to valid the health related information a different set of sensors may be used to determine that the user is positioned correctly and that the health related information is collected from when the user is positioned correctly. Correct positioning (or consistent position) provides consistence among health related information taken at different time.

In another aspect of the invention, a social interaction status of one or more users may be determined based on information received from sensors of different types. In one aspect sensors of a first type may be used to determine a position, location and/or identity of one or more users. A proximity graph may be formulated form the locations of the one or more users. Sensors of a second type may be used to determine a health condition associated with each of the one or more users wherein the health status is considered in view of the proximity graph.

For a better understanding of exemplary embodiments and to show how the same may be carried into effect, reference is made to the accompanying drawings. It is stressed that the particulars shown are by way of example only and for purposes of illustrative discussion of the preferred embodiments of the present disclosure, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice. In the accompanying drawings:
Figure 1 illustrates an exemplary system configuration in accordance with the principles of the invention.
Figure 2 illustrates an example of a tactile supported device in accordance with the principles of the invention.
Figure 3 illustrates a second exemplary system configuration in accordance with the principles of the invention.
Figure 4 illustrates an exemplary application of the system shown in Figure 1 in accordance with the principles of the invention.
Figure 5 illustrates an exemplary application of the system shown in Figure 1 in accordance with the principles of the invention.
Figure 6 illustrates a block diagram of an operation of the system shown in Figure 1 in accordance with the principles of the invention.
Figure 7 illustrates a flow chart of an exemplary processing in accordance with the principles of the invention.
Figure 8 illustrates a second exemplary application of the system shown in Figure 1 in accordance with the principles of the invention.
Figure 9 illustrates a flow chart of a second exemplary processing in accordance with the principles of the invention.

It is to be understood that the figures and descriptions of the present invention described herein have been simplified to illustrate the elements that are relevant for a clear understanding of the present invention, while eliminating, for purposes of clarity many other elements. However, because these omitted elements are well-known in the art, and because they do not facilitate a better understanding of the present invention, a discussion of such element is not provided herein. The disclosure herein is directed to also variations and modifications known to those skilled in the art.

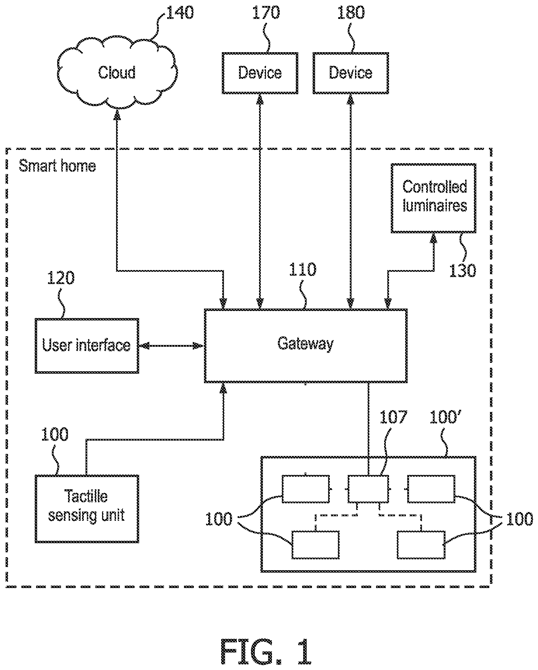

Figure 1 illustrates a block diagram of an exemplary system 10 in accordance with the principles of the invention.

In this exemplary system, a tactile sensing unit 100 provides information regarding contact information that a user may apply at one or more contact points. The contact information may be provided continuously or periodically. In one aspect of the invention, the tactile sensing unit 100 may provide pressure information when a pressure on the tactile sensing unit 100 is detected. In one aspect of the invention, a pressure sufficient to active the tactile sensing unit 100 for providing the detected pressure information may be one that exceeds a threshold pressure value or a pressure level that is below the threshold pressure value but is present for a predetermined time. In the former case, a pressure sufficient to exceed a threshold pressure may be one when a full size person is in contact with the tactile sensor unit. In the latter case, the pressure may be obtained from a child, having a contact pressure insufficient to exceed the threshold pressure but is in contact with the tactile sensor unit for an extended time (persistence).

The detected pressure information may then be provided to a gateway unit 110. The gateway unit 110 may represent a computer or server that is in direct communication with each of the tactile sensing units. The communication may be one or a wired communication or a wireless communication (i.e., BLUETOOTH, WIFI, etc.). Similarly, tactile sensing units 100 may be in communication with the gateway 110 over a large scale network, e.g., Internet, or over a local network (e.g., LAN). The networks may be public or private.

As would be appreciated, one or more tactile sensing units 100 that may be grouped together or may be distributed about an area 100'. The area 100' containing the one or more tactile sensing units 100 may be distributed such that only selected ones of the one or more tactile sensing units 100 may be contacted by a user. In this case, the selected ones of the one or more tactile sensing units 100 may be in communication with a centralized controller 107 that provides collects, collates and processes the information from the selected ones of the one or more tactile sensing units 100. The pressure information detected by each of the one or more tactile sensing units 100 (or a collected value provide by controller 107) may then be provided to gateway 110. Alternatively, the information from selected ones of the tactile sensing units may be independently provided to the gateway 110.

Although, the tactile sensing units 100 are described with regard to pressure, it would be appreciated that tactile sensing units 100 may be selected to measure or detect other parameters or characteristics. For example, the sensing units 100 may be associated with characteristics, such as heat, temperature, and movement. For example, the tactile sensing unit 100 may measure a change in heat from an ambient condition.

Gateway 110 represents a centralized controller that receives inputs from the tactile sensing units 100 (and/or collector 107) and determines a pattern associated with the received inputs. Gateway 110 may then provide instruction to devices, e.g., controlled luminaires 130, to alter the operating state of the controlled devices (e.g., luminaires, window blinds, etc.) surrounding the user.

Gateway 110 may further be in communication with a user interface device 120. User interface device 120 allows a user to input information to or receive information from gateway 110. For example user interface device 120 may include a display and a keyboard.

Gateway 110 may further be in communication with a larger network 140, wherein information from the network 140 may be provided to gateway 110 or information from gateway 110 may be provided to additional devices (not shown) through network 140.

As an example of the operation of the invention claimed, if it is determined that someone is seating on a sofa, the sofa seat cushions may include tactile sensing units 100 that detect pressure on the cushions. The pressure information may be provided to the gateway 110. The gateway 110 may further receive information regarding the status of a television and a time. The gateway 110 may then determine at least one characteristic of the user seating on the sofa. The characteristic may be one of a height, weight, a fingerprint, an identity, etc. The gateway 110 may then access a rules database and determine, based on the received input information, an action to be taken. For example, if the determined characteristic(s) indicates that the information from the tactile sensing unit 100 (or array 100') in the sofa cushions is associated with an adult, then no action may be invoked. However, if the determined characteristic(s) is associated with one or more children than a rule dictating that "if the children are on the living room sofa after 10pm, gently flash the living room light and notify the parents," then a command may be sent from the gateway 110 to luminaries within the room associated with the sofa to gently reduce the light level. Additional, commands may be sent to the TV (another controlled device) to turn the TV off, if the TV is determined to be on. In addition, a phone call or a text message may be sent to the parents' cell phone via network 140.

Figure 1 further illustrates devices 170, 180, which may represent controllable devices that provide inputs to, or receive inputs from, gateway 110. Devices 170, 180 may represent overhead lighting, for example, which may be controlled to alter the operating conditions of devices 170, 180 based on the characteristic and the associated rule.

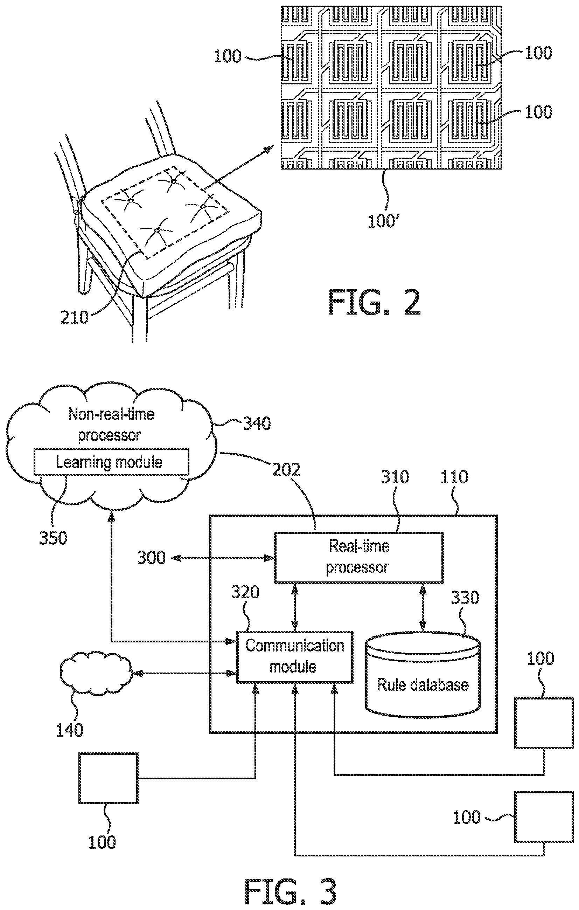

Figure 2 illustrates an example of a cushion 201 that may include one or more tactile sensor units 100 incorporated into a seat cushion 201. In this illustrated example, tactile sensor units 100 are arranged as an array of sensor units 100 positioned substantially in the center of cushion 210.

In this illustrative example, each of the tactile sensor units 100 may be identified by a unique identification. The unique identification may be used to determine a position of a tactile sensor unit 100. The position may be absolute or relative (i.e., with regard to adjacent tactile sensor units 100). Alternatively, the array 100' of tactile sensor units 100 may be identified uniquely identified and a position of an individual tactile sensor unit 100 may be determined based on the position of the array 100'. In one exemplary embodiment, tactile sensor unit 100 may include a GPS (Global Positioning Satellite) system that may be used to determine an absolute location or position of the tactile sensor unit. While other sensor units 100 may have a position relative to one or more sensing units 100 having an absolute location.

As would be appreciated, the sensor units 100 may be positioned in an arbitrary manner without altering the scope of the invention. Thus, while the array 100' shown herein is one of being a matrix format (i.e., sensing units 100 in rows and columns), it would be recognized that the term "array" as used herein may refer to a group of sensing units that are in a same local area, regardless of the relationship of one of the sensing units 100 with respect to adjacent sensing units 100.

In order to make the tactile sensing unit 100 sensitive to contact force while being invisible and non-tangible to the user, the tactile sensing unit 100 has to be manufactured to be flexible, thin, and stretchable and fabricated underneath the surface of cushion or home comfort object (HCO). State-of-art pressure sensing technology proves the feasibility. For example, US 2010/0257938A1, as discussed previously, discloses a thin flexible pressure sensor, the contents of which are incorporated by reference herein. In addition, a power source, for example, a button battery, may be incorporated into each sensing unit 100.

The power source provides power to the sensing unit 100 as well as a communication module. To save energy, energy efficient communication protocol may be chosen. In one aspect of the invention, the communication module may not be powered up until a threshold pressure is detected, for example.

Figure 3 illustrates a block diagram of gateway 110 in accordance with the principles of the invention.

In this illustrative exemplary embodiment, gateway 110 comprises a processor (e.g., a computer or processor) 310 that is in communication with one or more of the tactile sensors 100 and/or an external network 140, as shown in Figure 1, through a communication module 320. As would be recognized, communication module 320 is a logical representation of one or more different physical communication devices that operate with one or more suitable protocols. For example, communication module 320 may represent BLUETOOTH or WIFI protocols suitable for communication with tactile sensing units 100. Communication module 320 may also present a TCP/IP protocol suitable for internet access. In addition, communication module 320 may represent either wireless or wired devices that operate using the appropriate protocol.

Processor 310 is further in communication with data base 330. Data base 330 includes one or more rules or expressions that determine actions based on an analysis of information received from the one or more tactile sensor units 100. Although data base 330 is shown as being contained within gateway 110, it would be recognized that data base 330 may be external to, and remotely located from, gateway 110. Processor 310 may access data contained in data base 330 through communication module 320 and network 140 without altering the scope and principles of the invention.

Processor 310 may further be in communication with a second processor 340. Second processor 340 may be remotely located from processor 310 (as shown). Or the second processor 340 may be co-located with processor 310. Second processor 340 may include a learning module 350, which receives inputs from processors 310, 340 and determines patterns for different users based on characteristics developed from information provided by the tactile sensing units 100.

The data base 330 may be composed of a plurality of rules that invoke actions in response to the determination of a pattern of characteristics detected or measured by corresponding tactile sensing units 100.

For example, each rule in the rule database 330 may be described in a "if *condition* then *action*" format.

An exemplary rule for the application scenario described previously may be as follows:

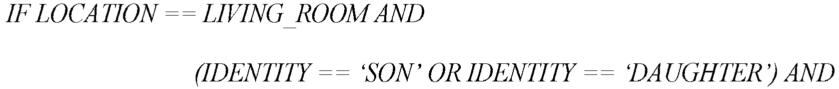

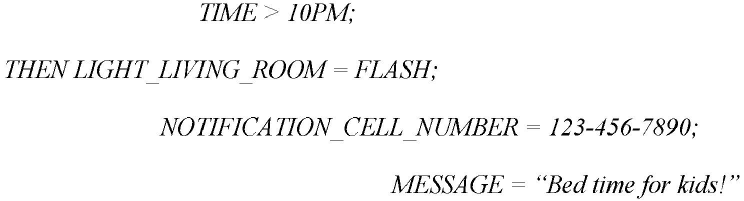

The above rule is described using a syntax associated with the well-known C programing language. It would be appreciated that the rules stored in data base 330 may be stored in order forms (e.g., tables) or in other programming languages. (e.g., SQL, Java, etc.). In the example shown above, three conditions are specified in the *if* clause (if either the son or the daughter is on sofa past 10pm) and two actions are defined in the *then* clause (i.e., flash the living room light and text a message (e.g., SMS, email, etc.) to the specified cell number). As would be appreciated, the above illustrated rules may be formulated such that if at least one child (and not necessarily either a son or daughter) is detected on the sofa, then the appropriate action may be a taken. As will be explained further, a determination of the person (or persons) located on the sofa (or the HCOs) may be determined based on distribution patterns measured from sensing units 100 positioned within the sofa (or other HCOs).

In addition, it would be recognized that the number of conditions and the number of actions may be increased and/or decreased without altering the scope of the invention. In one aspect of the invention, the specification of the rules may be manually provided by the user, via the user interface 120 (FIG. 1). The user interface 120 may include a display (not shown) that provides a graphic user interface that the user may employ to specify the conditions and the actions to be taken for each determined situation. GUIs are well known in the art and a detailed discussion of the operation of GUIs is not needed.

Alternatively, commonly-used rules can be defined and published online so that the user may adapt the commonly-used rules for their own settings.

In another aspect of the invention user interface 120 may be implemented as a mobile application installed on the user's smart phone. The graphic user interface may present an interface to the user to calibrate the identity and locate the sensor units 100, to create, update, share and remove rules.

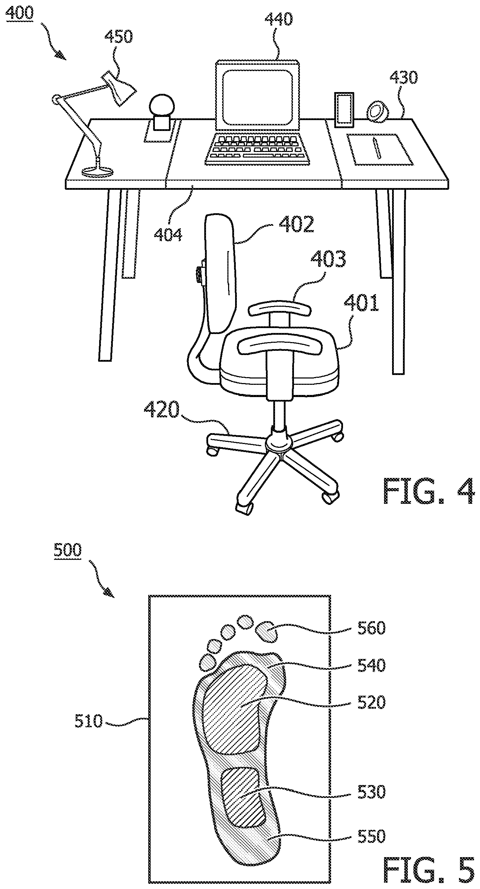

Figure 4 illustrates an exemplary system configuration 400 in accordance with the principles of the invention.

In this illustrative system 400, sensing units 100 are incorporated into a plurality of locations in a chair 420 and a desk 430. For example, sensor units 100 may be incorporated into the seat 401 of chair 420, as shown in Figure 3. Sensor units 100 may further be incorporated into the back 402 and the arms 403 of chair 420. Sensor units 100 incorporated into the seat 401, back 402 and arms 403 may provide information to gateway 110. Gateway 110 may then correlate the provided information to determine a profile of a user sitting in chair 420. For example, a pressure on selected ones of the tactile sensing units in seat 401 may distinguish between an adult and a child. Similarly, a pressure on selected ones of the tactile sensing units in back 402 may determine a height of a person sitting in chair 420.

Also shown are sensor units 100 incorporated into desk 430. Sensor units 100 may be incorporated directly into a top of desk 430 or may be incorporated on a place mat 404, which is positioned on the top of desk 430. Sensing units 100 on the top of desk 430 (or a place mat) may determine whether the hand or arm location of a user sitting in chair 420. For example, if the user is typing on a keyboard of a laptop computer 440, as illustrated, gateway 110 may determine the position of the hands of a user by a difference in pressure exerted on the sensing units 100 between the laptop computer with hands on the keyboard and without hands on the keyboard.

In this illustrative application of the invention, gateway 110 receiving inputs from sensing units 100 located in different positions of chair 420 and desk 430 and may determine the position of a person sitting in the chair and adjust the lighting of lamp 450 such that the lighting provided by lamp 450 is suitable for the task being performed.

Although lamp 450 is shown as being a desk lamp, it would be appreciated that the lighting control may extend to overhead light (not shown) or control of window coverings (i.e., window blinds) to provide appropriate lighting for the task being perform. For example, gateway 110, after determining a task being performed, based on the analyzed sensing unit 100 inputs, may adjust a combination of overhead lighting, local task lighting and window covering positions, such that adequate lighting may be projected onto the working surface (e.g., top of desk 430) while achieving a best energy efficiency.

Figure 5 illustrates a further exemplary embodiment in accordance with the principles of the invention, wherein a placement (not shown) including sensing units 100 (not shown) may be placed such that a user applies a pressure by the positioning of their feet. In this illustrated example, greater levels of pressure, applied by a foot 500, may result in different distribution patterns (e.g., of pressures). Figure 5 illustrates that greater pressure may be measured in areas 520, 530 (shown with a denser degree of hashing) that in areas 540, 550 and 560 for example (shown with less degree of hashing, wherein the density of the hashing indicates a level of pressure).

As discussed a person's identity can be recognized by the pressure the person exerts on a home care object (HCO, e.g., a seat cushion, a blanket, a footpad, etc.). However, using a single numerical number to identify a person can be inaccurate considering persons with similar weights and weight changes over time. To compensate for this inaccuracy, a pressure distribution pattern (e.g., 520, 530), may be used. Alternatively, the pressure distribution pattern may be collected over a period of time, and thus may be used to distinguish one person over another.

A pressure distribution pattern is the spatial distribution of pressure over multiple contact points or HCOs. An example pressure distribution pattern of a foot is shown in Figure 5, wherein the greater density of hasher (or darker shading) represents greater degree of pressure.

Figure 5 illustrates five (5) different pressure distribution patterns. However, if would be appreciated that any number of pressure distribution patterns may be formulated. In one aspect of the invention, a pressure distribution pattern may be formulated by including those points within a known distance from a point (or area) having a maximum pressure. In another aspect of the invention, a pressure distribution pattern may be formulated to include those points having a pressure greater than a threshold value, wherein the threshold value is measured with respect to the point or area having a maximum pressure (i.e., pressures greater than 75 percent of maximum pressure included in the pressure distribution pattern).

As would be appreciated, pressure values within an overlap area of two distribution patterns may be assigned to one or both of the pressure distribution patterns. In one aspect, those points within two patterns may be assigned to that distribution pattern to which those points are closer to a maximum pressure of the two patterns.

In another aspect of the invention, the number of distribution patterns may be culled, such that only those patterns satisfying a known criterion may be further processed. For example, if a maximum pressure within a distribution pattern is below a threshold value of a maximum pressure of all the distributions, (e.g., maximum pressure in a distribution pattern is less than 30 per cent of the maximum pressure of all distribution patterns) then the distribution pattern may be discarded.

In this case, only those patterns that are considered more reliable are selected for continued processing.

Although Figure 5 has been described with regard to a pressure and a pressure distribution pattern, it would be recognized that the sensing unit(s) 100 may be associated with other information and, thus, the distributions patterns may be associated with measurable events such as heat, blood pressure, heart rate, galvanic response, etc.).

As different people tend to have different distribution patterns when being seated due to seating position, seating posture and body weight distribution, it is possible to determine an identity of the person. For example, some people prefer to sit in contact with the back of the seat whereas others prefer to sit on the edge of the seat. These kinds of seating habits provide hints for the invention to further distinguish between family members.

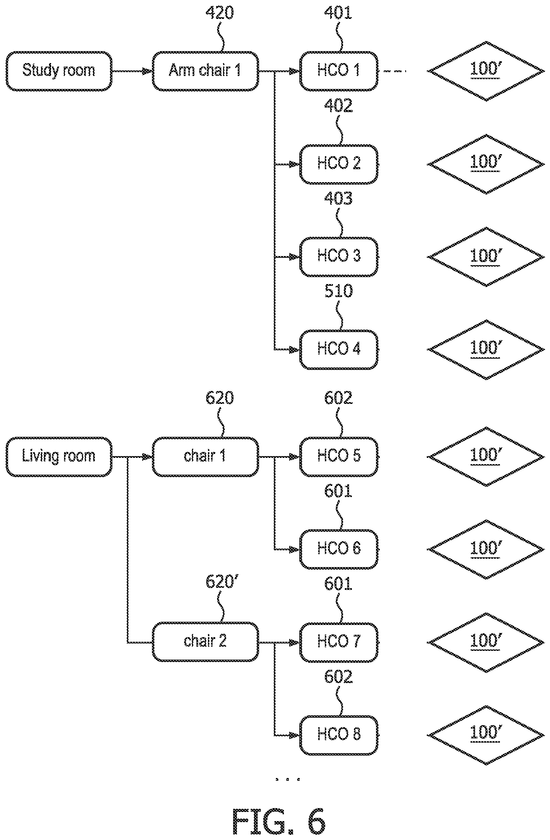

Figure 6 illustrates a block diagram of exemplary configuration of a system in accordance with the principles of the invention.

In this illustrative example, sensing units 100 (incorporated into arrays 100') may be positioned in a seat 401, a back 402, and an arm 403 in a chair 420 in a study room. In addition, chairs 620, 620' in a living room may further incorporate arrays 100' in a seat 601 and/or back 602. Gateway 110 (not shown) may receive inputs from selected ones of the sensing units 100 in arrays 110'. Gateway 110 may determine the identity and position of the persons in each room and/or chair to determine the ambient lighting conditions suitable for the task being performed by the user(s). Although not shown it would be appreciated that inputs from sensing units 100 associated with operating conditions of other devices (e.g., television, radio, etc.) may be provided to gateway 110, as previously discussed. Gateway 110, after analysis of the received inputs, accesses data base 330 to determine an appropriate action(s) to be taken.

In another aspect of the invention, a posture and related information of a user can be derived from the distribution pattern. For example, if a person is sitting in front of a computer, laying heavily on the back of the seat and two arms totally resting on the arm rest, his eyes are probably farther away from the screen. In this scenario, depending on the sex and age of the person, which can be derived from his/her identity, a reduced background ambient light may be more desirable. On the other hand, if a person puts his body weight mainly on the front edge of the seat and two arms partially supported by the arm rest, the person is more-likely working with eyes closer to the screen. In this scenario, a different lighting effect can be used. This non-intrusive lighting control mechanism can be pre-defined as rules. It is desirable because users are usually reluctant or simply don't know how to change the lighting to protect his or her eyes.

In another aspect of the invention, a person's health may be inferred from the signals collected by the HCOs that are in contact with a person's back, hands, wrist, neck, etc. Such HCOs may include a mouse pad, an arm rest or a neck rest. According to the medical literature, heart rate variability is associated with a personal's emotion, heart health, stress level and sleep deprivation level. In one embodiment, if the heart rate of a person working during a late night is detected by the mouse pad to be below a certain level, more intense white light can be used to reduce sleepiness and increase alertness. If an abnormal heart rate lasts for several nights, alerts may be sent to the person's cell phone about the warning signs of potential very serious health problems.

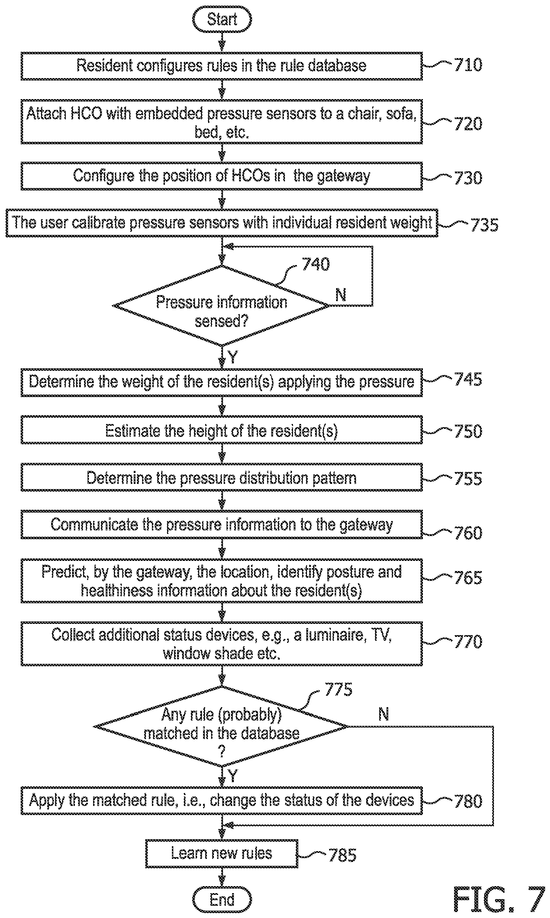

Figure 7 illustrates a flowchart 700 of an exemplary processing in accordance with the principles of the invention.

In this illustrative processing, a set of rules are established in a rules data base at block 710. The rules may be preconfigured rules, which are pre-loaded, or may be customization of preconfigured rules, using the user interface, or may be rules that the user creates based on their own conditions.

As previously discussed, the rules may be in the form of "if-then" statements. However, it would be understood that the rules may also be implemented using well known artificial intelligence (AI) techniques (e.g., fuzzy logic) such that actions may be taken even if all the conditions expressed in an "if' statement are not satisfied. For example, the learning module may weigh the rules such that an appropriate combination of satisfied rules is sufficient to take the corresponding action. For example, in the above example, satisfaction of the three rules (i.e., if conditions) invokes the execution of the two action. In this case, each of the rules is weighted at 100 percent and the intersection of each of the rules is required to satisfy a threshold condition to execute the corresponding actions. However, in one aspect of the invention, the rules may be weighted such that the weighted sum of the satisfaction of a plurality of rules (but not all the rules) is sufficient to initiate the corresponding actions. In another aspect of the invention, the learning module may adapt existing rules based on determined user behavior and/or user inputs to develop additional rules having larger tolerance values, for example.

At block 720, sensing units 100 are identified. The location and identity of each sensor unit 100 (or array 100') may be determined by a GPS location device and a unique identifier. Or the location of sensing units 100 may be determined based on a relative position with respect to sensing units having a GPS location device.

At block 730, each of the identified and located sensing units 100 is configured in the gateway 110, such that the gateway 110 may create a model of the configuration of the sensing units 100 with regard to each HCO.

At block 735, the configuration of sensing units 100 is calibrated with regard to individual users. For example, a user may provide inputs, using the user interface, regarding their identity, for example. Further information, such as age, weight, height, etc., may be also be inputted to the gateway 110 so that gateway 110 may create a profile containing the user provided information. The user provided information may be stored conjunction with information provided by the sensing units 100, as the user is in contact with the sensing units 100 in one or more HCOs. As would be appreciated, the user interface may be interactive, wherein the gateway 110 may enter an interactive mode in which questions are provided to the user. The answers may then be collected with the other user provided information. For example, the gateway 110 may first ask a question such as name, and in response to the provided name information, the gateway 100 may ask a second question, such as male or female or age, etc. Thus, a profile of a user may be formulated that matches identity with distribution patterns.

At block 740, and after calibration, a determination is made whether information (e.g., pressure) from one or more of the sensing units 100 has been detected. As previously discussed, the determination of a pressure being detected may be one of acute (i.e., greater than a threshold) and chronic or persistent (lower than a threshold but persistent for a predetermined time).

At block 745 and block 750, after a pressure has been detected, the weight and height of a person activating one or more sensing units 100 may be determined from the information provided by the one or more sensing units 100.

At block 755 a distribution pattern of the sensing units 100 providing the detected information is determined. The distribution pattern may represent a number of sensing units 100 activated and a pressure (or other characteristic) associated with each of the sensing units 100. The determined distribution pattern may then, in one aspect of the invention, be refined to remove sensor information that is not within a mean of the distribution pattern, for example.

At block 760, the pressure information and/or distribution pattern may be provided to the gateway 110. In one aspect of the invention, the gateway 110 may receive individual pressure information of each sensor or from a sensor array 100'. In this case, the gateway 110 may determine the distribution pattern. In another aspect of the invention, a sensor array 110' may determine the pressure distribution pattern and provide the pressure distribution pattern to the gateway 110.

At block 765, the gateway 110 receiving individual measurements and/or distribution pattern collates the received information in order to determine one or more of a location, an identity, a posture and/or a health of a person activating the sensing units 100. The measurements and/or distribution pattern received by the gateway 110 may be compared to the inputted data used to create a profile of the users, for example.

At block 770, information regarding auxiliary devices may be received by the gateway 110. Auxiliary devices may comprise lighting, television, radio, window shading, air conditioning, thermostat, etc. The information provided by the auxiliary devices may consist of, lighting level, television status or channel, noise level, window shading position, air condition status, room temperature, etc.

At block 775 a determination is made regarding whether one or more of the rules in the data base have been satisfied. If one or more rules have been satisfied, then corresponding actions are taken with respect to the satisfied conditions. As previously discussed, satisfaction of the rules in the data base may be determined using fuzzy logic, for example, wherein the conditions may be weighed, such that an accumulated sum of the conditions is sufficient to indicate the conditions have been satisfied.

For example, satisfaction of a condition may be probabilistic, wherein a number of features, e.g., weight on HCO, height of resident, distribution pattern(s) may be determined and used to predict a probability of validness of a condition. If the probability is above threshold, e.g., 80%, the condition may be considered valid. In another aspect, an accumulation of conditions that are considered valid may be required to be above a second threshold in order to initiate the corresponding actions. In still another embodiment, learning techniques, such as Neural Networks, may be used to assign and adapt the weight of each feature (condition) via a learning mechanism. In another aspect of the invention, the system may gradually learn new rules based on existing rules and user behavior.

At block 780, the actions associated with valid conditions may then be executed when the conditions and/or the accumulated conditions are satisfied.

At block 785, new rules may be formulated, or old rules may be altered, as the system iteratively implements actions based on information received from one or more of the sensing units 110.

In another aspect of the invention, a combination of sensing units 100 may be employed in an HCO wherein the sensing units 100 may be one of pressure sensor, an electrode-based sensor, a light or optical based sensor, etc. The electrode-based sensors may be selected to provide information regarding measureable events associates with electrocardiograms (EKG), electroencypergrams (ECG), galvanic skin response (GSR) and other similar bio-impedance measurements. The light-based sensors may be selected to measure different levels of illumination at a surface, measure different wavelengths, etc.

In one aspect of the invention, the bio-impedance measures may be accumulated and a healthiness of the user may be determined. The measurements may be collected and stored. And as previously described, an action may further be initiated in response to the bio-impedance measurements considering an identity of a user or resident. The specific action may be determined based on at least one rule associated with the user.

For example, a combination of tactile sensing units 100 and bio-impedance sensing units 100 may be distributed in a HCO, such as a chair or bed. The tactile sensors 100 may determine a distribution pattern of a user and based on the distribution pattern may further identify the user, as previously described. Alternatively, the identity of the user may be input to the system. And the distribution pattern used to determine the position of the user.

Concurrently the bio-impedance sensing units 100 may collect corresponding information, e.g., heart rate, pulse, that may be used to determine a health of the user.

In one aspect of the invention, the bio-impedance data measurements may be validated in order to determine whether the data measurements are reliable. For example, based on a pressure measured by one or more tactile sensors 100, the bio-impedance measurements may be validated.

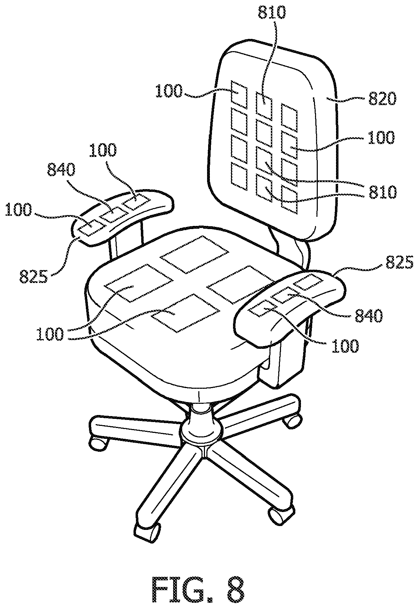

Figure 8, illustrates an example, system for validating bio-impedance measurement data in accordance with the principles of the invention. In this illustrative example, bio-impedance sensing units 810 and sensing units 100 (e.g., tactile sensors) are incorporated into a chair back 820. Similarly, bio-impedance sensors 840 and sensing units 100 are incorporated into at least one chair arm 825. As would be appreciated bio-impedance sensors 810 and 840 may be the same or different. For example, sensors 810 may be associated with a cardio (e.g., heart rate) measurement, while sensors 840 may be associated with a galvanic measurement.

As previously discussed, sensing units 100 may be used to determine a distribution pattern that may be used to determine a position and/or an identity of a user. Concurrently the bio-impedance sensors 810, 840 may measure corresponding heart rate and galvanic skin response.

Based on the identity of the user (as obtained from the distribution pattern or input directly) the bio-impedance measures may be compared to expected ranges of measurement and/or previous history information, which has been stored in the user profile.

In order to validate the bio-impedance measurements and to provide consistency among bio-impedance measurements taken at different times, the measurements associated with one or more sensing units 100 should exceed a threshold value.

For example, if a heart rate measurement is desired, then the position of the user contacting chair back 820 should be substantially the same for each measurement. In this matter, the bio-impedance measurements may be validated.

Similarly, if a galvanic measurement is required, then contact with the chair arm 825 should exceed a threshold level in order to validate the measurements of the corresponding bio-impedance sensors 840.

A health condition of the user may be determined based on the validated bio-impedance sensor 840 measurements. The determined health condition may be compared to expected ranges and/or previously history values associated with the user, to determine an action to be taken.

For example, if the user's heart rate lies outside an expected range or is greater than a threshold (e.g., a known percentage) above previously history values, then a stress condition may be determined. Based on the user identity and the determined stress condition, the lighting surrounding the user may be varied to reduce the determined stress condition. Or calls to doctors or emergency personal may be initiated.

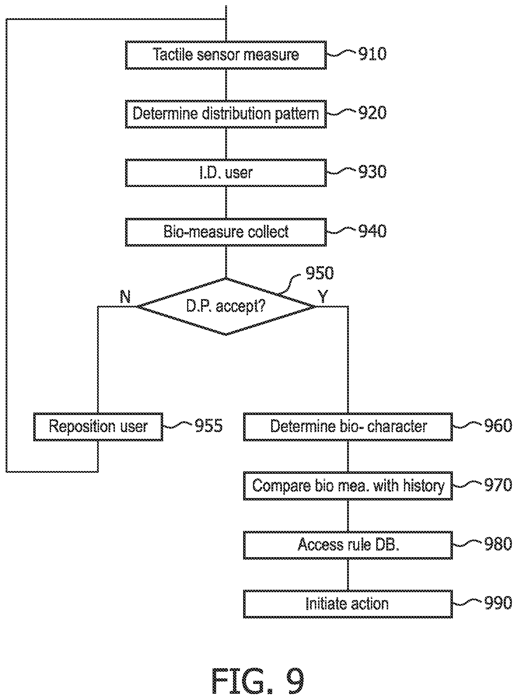

Figure 9 illustrates a flow chart of an exemplary embodiment of the system configuration shown in Figure 8.

In this illustrative embodiment, at step 910, measurements from tactile sensing units 100 are collected. At step 920, a distribution pattern based on the measurements associated with the tactile sensing units 100, in each of at least one area, may be determined as previously described. An identity of the user may be determined at block 930. The identity of the user may be determined based on the determined distribution pattern or may be input by the user or another person (e.g., a health care professional).

At block 940, bio-impedance measurements may be collected.

At block 950, a determination may be made whether the distribution pattern in an area corresponding to a desired bio-impedance measurement is valid (e.g., exceeds a threshold value). The threshold value may be determined for individuals generally (e.g., male, female, age, etc.), or may be associated with individual users (e.g., stored in a user profile). For example, the threshold values may be determined based on physical characteristics of the user-- height, weight, etc. In one aspect of the invention, the threshold value may be selected differently for distribution pattern areas. The threshold values may be pre-determined based on expected physical characteristics or dynamically determined. The threshold values may be stored in the user profile.

When the distribution pattern exceeds the corresponding threshold value, a current health condition (e.g., heart rate variability) of the user may be determined from the bio-impedance measurements, at block 960. Although bio-impedance measurements are discussed, as an example, it would be appreciated that heart rate and heart rate variation data may be collected with an appropriate chose of sensors.

As would be recognized a distribution pattern may be determined based on a maximum value of the distribution pattern, an average value of the values within the distribution pattern, an average value of the values within the distribution pattern within a known range of the maximum value of the distribution pattern, etc. As would be appreciated, other processes for determining a value for comparing to a threshold value may be formulated without altering the scope of the invention.

At block 970, a comparison of the current health condition with at least one of an expected range (based on a characteristic of the identified user, e.g., age, sex) and a previous history data of the identified user is performed.

At block 980, a data base is accessed to determine at least one rule associated with the identified user and the determined health condition with regard to the expected ranges and/or previous history data.

At block 990, an action associated with the determined rule is performed.

For example, if the user is identified as, John, who is 66 year old male, previously having high blood pressure, when a current determined blood pressure (based on validated measurements) exceeds a threshold value, then an action may be taken to lower surrounding lighting or to change the lighting color towards a blue color to reduce the determined blood pressure. In addition, an alarm may be provided to the user in the form of a display to present the determine blood pressure. A generalized rule with regard to the above determined blood pressure may be formulated as:

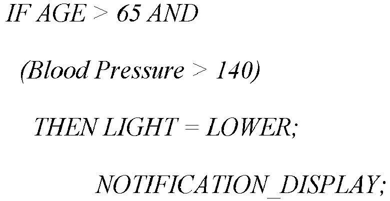

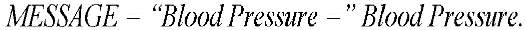

In another aspect, a more personalized rule may be formulated as:

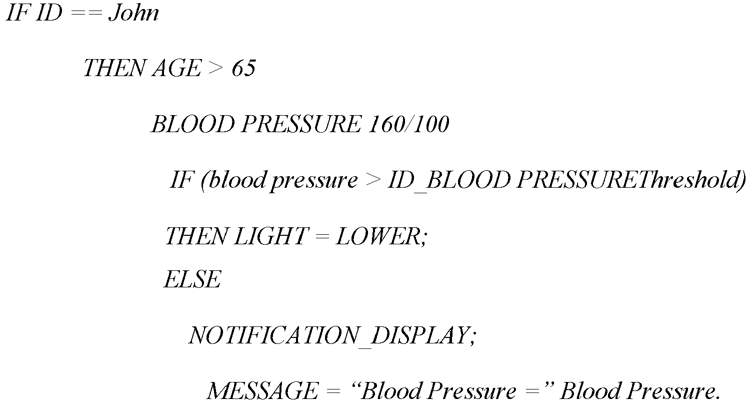

In this latter case, if the measured blood pressure (i.e., blood pressure) is greater than a threshold (ID_BLOOD PRESSURE Threshold), which is associated with John then lights are lower and a message is displayed. Otherwise, a message is displayed. In one aspect of the invention, the ID_BLOOD PRESSURE Threshold may be determined based on an age of the user (AGE) or may be determined based on a pass history of similar measurements associated with the identified user. In this latter case, the past history may represent an average value of measurements collected over a known period of time, for example. The threshold value may then be determined based on the average value of the past history values.

As would be appreciated the actions resulting from the determined identification and measurements may further include actions such as initiated a new set of measurement data, for example.

Returning to the determination at block 950, if the distribution pattern is not acceptable, then the user may be notified to reposition themselves in order to obtain a better measurement. Processing then continues at block 910 in order to repeat the process. In this case an unacceptable distribution pattern may be determined by comparison of a currently determined distribution pattern with previously collected distribution patterns associated with the user.

Although the present invention has been described with regard to a chair, it would be appreciated that the combination of sensing 810, 840, 100 may be incorporated into a bed, wherein validated measurements may be determined when the user is laying on their back and not on their side, for example. Thus, bio-impedance measurements or other measurements (e.g., heart rate, heart rate variation, stress level, etc.) may be taken when the user is in a correct position to prevent inaccurate measurements from entering the data based.

In another aspect of the invention, a social healthiness of one or more residents may be determined based on information obtained from distributed sensing units 100. For example, sensor units 100 incorporated into chairs, sofas, table, etc., may collect data on each of a plurality of residents (or users) sitting on the chairs and sofas, for example. As previously discussed, distribution patterns based on the sensor information may be determined from each of the plurality of residents. In addition, an identity of each resident may be determined based on the distribution patterns and a location of each resident may be determined based on the location of the sensor units.

A proximity graph may then be determined based on the distribution patterns and/or determined locations.

The proximity graph may then be used to determine a length of time, for example, a pair of identified residents remains in close proximity to each other. The length of time may then be used to determine a level of interaction between the pair (or multiple pairs) of identified residents.

Concurrently, a health status of each of the residents may be monitored during the interaction. In one aspect, a determination may be made whether the interaction between the residents is comforting based on collected sensor data associated with heart rate or galvanic response. Alternatively, a determination may be made whether the interaction is unsettling based on the collected sensor data.

Although the invention has been described with regard to tactile sensors, such as pressure sensors, it would be appreciated that the invention described herein may incorporate multiple sensors that may be used to measure pressure, heat, luminance, etc., in order to provide different types of sensor data that may be used to provide control of the environment surrounding a user or resident.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Furthermore, a computer, a processor and/or dedicated hardware/software are described herein as being capable of performing the processing described herein, and it would be recognized that a computer, a processor and/or dedicated hardware/software are well-known elements in the art of signal processing and, thus, a detailed description of the elements of the processor need not provided in order for one skilled in the art to practice the invention described, herein.

The invention has been described with reference to specific embodiments. One of ordinary skill in the art, however, appreciates that various modifications and changes can be made without departing from the scope of the invention as set forth in the claims. Accordingly, the specification is to be regarded in an illustrative manner, rather than with a restrictive view, and all such modifications are intended to be included within the scope of the invention.

Benefits, other advantages, and solutions to problems have been described above with regard to specific embodiments. The benefits, advantages, and solutions to problems, and any element(s) that may cause any benefits, advantages, or solutions to occur or become more pronounced, are not to be construed as a critical, required, or an essential feature or element of any or all of the claims.

As used herein, the terms "comprises", "comprising", "includes", "including", "has", "having", or any other variation thereof, are intended to cover non-exclusive inclusions. For example, a process, method, article or apparatus that comprises a list of elements is not necessarily limited to only those elements but may include other elements not expressly listed or inherent to such process, method, article, or apparatus. In addition, unless expressly stated to the contrary, the term "of refers to an inclusive "or" and not to an exclusive "or". For example, a condition A or B is satisfied by any one of the following: A is true (or present) and B is false (or not present); A is false (or not present) and B is true (or present); and both A and B are true (or present).

The terms "a" or "an" as used herein are to describe elements and components of the invention. This is done for convenience to the reader and to provide a general sense of the invention. The use of these terms in the description herein should be read and understood to include one or at least one. In addition, the singular also includes the plural unless indicated to the contrary. For example, reference to a composition containing "a compound" includes one or more compounds. As used in this specification and the appended claims, the term "or" is generally employed in its sense including "and/or" unless the content clearly dictates otherwise.

All numeric values are herein assumed to be modified by the term "about," whether or not explicitly indicated. The term "about" generally refers to a range of numbers that one of skill in the art would consider equivalent to the recited value (i.e., having the same function or result). In any instances, the terms "about" may include numbers that are rounded (or lowered) to the nearest significant figure.

It is expressly intended that all combinations of those elements that perform substantially the same function in substantially the same way to achieve the same results are within the scope of the invention. Substitutions of elements from one described embodiment to another are also fully intended and contemplated.

## Claims

1. A gateway (110) for controlling at least one controllable device (130), the gateway (110) configured to:
receive information from at least one tactile sensing unit (100) embedded in at least one home comfort object, HCO; formulate a pressure distribution pattern of said information;
identify a user profile based on said pressure distribution pattern;
determine an action based on said identified user profile and said received information, said action being determined based on satisfaction of at least one rule from among a plurality of rules; and
control the at least one controllable device (130) based on the determined action.

2. A provisioning system comprising:
at least one tactile sensing unit (100) embedded in at least one home comfort object, HCO;
the gateway (110) of claim 1; and
at least one controllable device (130) responsive to inputs from said gateway (110), said inputs from said gateway being determined based on the determined action.

3. The system of claim 2, wherein the at least one tactile sensing unit (100) is incorporated in a surface of said home comfort object.

4. The system of claim 2, wherein the tactile sensing unit (100) is at least one of: a tactile sensor, a pressure sensor.

5. The system of claim 2, wherein the information received from selected ones of said at least one tactile sensing unit (100) is provided in one of: continuous and periodical manner.

6. The system of claim 2, further comprising:
a database (330), said database comprising said plurality of rules and associated actions.

7. The system of claim 2, wherein said at least one controllable device (130, 170, 180) comprises at least one of: a lighting system, an electronic device, a television, a radio, window shading, air conditioning, and a thermostat.

8. The system of claim 2, wherein the gateway is further configured to collate the received information, and to determine a posture and/or a health of a user associated with the user profile.

## Patentansprüche

1. Gateway (110) zum Steuern mindestens eines steuerbaren Geräts (130), wobei das Gateway (110) konfiguriert ist zum:
Empfangen von Informationen von mindestens einer taktilen Abtasteinheit (100), die in mindestens einem Wohnkomfortobjekt HCO eingebettet ist;
Formulieren eines Druckverteilungsmusters der Informationen;
Identifizieren eines Benutzerprofils basierend auf dem Druckverteilungsmuster;
Bestimmen einer Aktion basierend auf dem identifizierten Benutzerprofil und den empfangenen Informationen, wobei die Aktion basierend auf der Erfüllung mindestens einer Regel aus einer Vielzahl von Regeln bestimmt wird; und
Steuern des mindestens einen steuerbaren Geräts (130) basierend auf der bestimmten Aktion.

2. Versorgungssystem, umfassend:
mindestens eine taktile Abtasteinheit (100), die in mindestens einem Wohnkomfortobjekt HCO eingebettet ist;
das Gateway (110) nach Anspruch 1; und
mindestens ein steuerbares Gerät (130), das auf Eingaben von dem Gateway (110) reagiert, wobei die Eingaben von dem Gateway basierend auf der bestimmten Aktion bestimmt werden.

3. System nach Anspruch 2, worin die mindestens eine taktile Abtasteinheit (100) in eine Oberfläche des Wohnkomfortobjekts integriert ist.

4. System nach Anspruch 2, worin die taktile Abtasteinheit (100) mindestens eines ist von: einem taktilen Sensor, einem Drucksensor.

5. System nach Anspruch 2, worin die von ausgewählten der mindestens einen taktilen Abtasteinheit (100) empfangenen Informationen in einer der folgenden Formen bereitgestellt werden: kontinuierlich und periodisch.

6. System nach Anspruch 2, das weiter umfasst:
eine Datenbank (330), wobei die Datenbank die Vielzahl von Regeln und zugehörigen Aktionen umfasst.

7. System nach Anspruch 2, worin das mindestens eine steuerbare Gerät (130, 170, 180) mindestens eines umfasst von: einem Beleuchtungssystem, einem elektronischen Gerät, einem Fernseher, einem Radio, einer Fensterbeschattung, einer Klimaanlage und einem Thermostat.

8. System nach Anspruch 2, worin das Gateway weiter konfiguriert ist, um die empfangenen Informationen zu sammeln und eine Haltung und/oder eine Gesundheit eines Benutzers zu bestimmen, der dem Benutzerprofil zugeordnet ist.

## Revendications

1. Passerelle (110) pour commander au moins un dispositif pouvant être commandé (130), la passerelle (110) étant configurée pour :
recevoir des informations en provenance d'au moins une unité de détection tactile (100) incorporée dans au moins un objet de confort domestique, HCO ;
formuler un modèle de distribution de pression desdites informations ;
identifier un profil d'utilisateur sur la base dudit modèle de distribution de pression ;
déterminer une action sur la base dudit profil d'utilisateur identifié et desdites informations reçues, ladite action étant déterminée sur la base de la satisfaction d'au moins une règle parmi une pluralité de règles ; et
commander l'au moins un dispositif pouvant être commandé (130) sur la base de l'action déterminée.

2. Système de provisionnement comprenant :
au moins une unité de détection tactile (100) incorporée dans l'au moins un objet de confort domestique, HCO ;
la passerelle (110) selon la revendication 1 ; et
au moins un dispositif pouvant être commandé (130) en réponse à des entrées provenant de ladite passerelle (110), lesdites entrées provenant de ladite passerelle étant déterminées sur la base de l'action déterminée.

3. Système selon la revendication 2, dans lequel l'au moins une unité de détection tactile (100) est incorporée dans une surface dudit objet de confort domestique.

4. Système selon la revendication 2, dans lequel l'unité de détection tactile (100) est au moins un : d'un capteur tactile, d'un capteur de pression.

5. Système selon la revendication 2, dans lequel les informations reçues en provenance des éléments sélectionnés de ladite au moins une unité de détection tactile (100) sont fournies selon l'une : d'une façon continue et d'une façon périodique.

6. Système selon la revendication 2, comprenant en outre :
une base de données (330), ladite base de données comprenant ladite pluralité de règles et d'actions associées.

7. Système selon la revendication 2, dans lequel ledit au moins un dispositif pouvant être commandé (130, 170, 180) comprend au moins l'un : d'un système d'éclairage, d'un dispositif électronique, d'une télévision, d'une radio, d'un obturateur de fenêtre, d'une climatisation et d'un thermostat.

8. Système selon la revendication 2, dans lequel la passerelle est en outre configurée pour collationner les informations reçues et pour déterminer une posture et/ou un état de santé d'un utilisateur associé au profil d'utilisateur.
